(19) Europäisches Patentamt
European Patent Office
Office européen des brevets

(11) **EP 4 317 503 A1**

(12) **EUROPEAN PATENT APPLICATION**
published in accordance with Art. 153(4) EPC

(43) Date of publication:
**07.02.2024 Bulletin 2024/06**

(21) Application number: **22779861.8**

(22) Date of filing: **08.03.2022**

(51) International Patent Classification (IPC):
***C22C 38/00*** *(2006.01)*     ***C22C 38/46*** *(2006.01)*

(52) Cooperative Patent Classification (CPC):
**C22C 38/00; C22C 38/46**

(86) International application number:
**PCT/JP2022/010061**

(87) International publication number:
**WO 2022/209637 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 JP 2021063442**

(71) Applicant: **NISSAN MOTOR CO., LTD.**
**Kanagawa 221-0023 (JP)**

(72) Inventors:
 • **KOBAYASHI, Daisuke**
  **Atsugi-shi, Kanagawa 243-0123 (JP)**
 • **HAMADA, Takahiro**
  **Atsugi-shi, Kanagawa 243-0123 (JP)**

 • **MASUO, Hideki**
  **Atsugi-shi, Kanagawa 243-0123 (JP)**
 • **YAMADA, Yuuichi**
  **Atsugi-shi, Kanagawa 243-0123 (JP)**
 • **GOLOBORODKO, Alexandre**
  **Atsugi-shi, Kanagawa 243-0123 (JP)**
 • **OHASHI, Ryosuke**
  **Nagoya-shi, Aichi 457-8545 (JP)**
 • **ASAOKA, Shohei**
  **Nagoya-shi, Aichi 457-8545 (JP)**
 • **KATO, Makio**
  **Nagoya-shi, Aichi 461-8581 (JP)**
 • **YASUDA, Shinji**
  **Tokai-shi, Aichi 477-0035 (JP)**

(74) Representative: **Grünecker Patent- und Rechtsanwälte PartG mbB Leopoldstraße 4 80802 München (DE)**

(54) **UNTEMPERED STEEL FOR CRANKSHAFTS AND CRANKSHAFT USING UNTEMPERED STEEL**

(57)     A non-heat treated steel for a crankshaft of the present invention comprises iron (Fe) as a main component and also comprises 0.37 to 0.43 mass % of carbon (C), 0.15 to 0.35 mass % of silicon (Si), 0.90 to 1.30 mass % of manganese (Mn), 0.08 to 0.15 mass % of vanadium (V); and the content of phosphorous (P) is 0.030 mass % or less, the content of copper (Cu) is 0.300 mass % or less, the content of nickel (Ni) is 0.30 mass % or less, and the content of chromium (Cr) is 0.35 mass % or less.

The non-heat treated steel also comprises 0.010 to 0.035 mass % of sulfur (S) and 0.02 to 0.05 mass % of bismuth (Bi), which are machinability-improving elements. Thus, the non-heat treated steel has a high fatigue strength and a high yield strength and also has an excellent machinability.

EP 4 317 503 A1

**Description**

TECHNICAL FIELD

The present invention relates to a non-heat treated steel for a crankshaft and a crankshaft using the non-heat treated steel.

BACKGROUND ART

Many mechanical components are subjected to a thermal refining treatment for adjusting mechanical properties. Specifically, a carbon steel or alloy steel component, which is formed into a shape of a product, is subjected to quenching and tempering. In quenching, the component is heated to an austenite phase region and is then rapidly cooled to generate a martensite phase.

Some types of non-heat treated steel are known to have a desired strength although they do not undergo such a thermal refining treatment. For these types of non-heat treated steel, an element that accelerates precipitation strengthening, such as vanadium (V), niobium (Nb), or titanium (Ti), is added in a small amount, and the composition of steel is controlled, whereby a thermal refining treatment after hot working is not necessary.

Most automobile components must withstand variable loads over a long period of time and are required to have a high fatigue strength.

In particular, a crankshaft receives a load suddenly varied by an explosive force that is applied to a piston, and therefore, it should have a sufficient yield strength in addition to a high fatigue strength.

It is possible to improve fatigue strength and yield strength of a crankshaft by using a high hardness steel material as a steel material for a crankshaft. However, a steel material only having a high hardness reduces machinability.

A crankshaft, which is used in combination with a connecting rod, should have a high surface accuracy and is required to be made of a steel material having an excellent machinability. In consideration of this, it is not feasible to manufacture a crankshaft by using a steel material only having a high hardness.

Although not related to a steel material for a crankshaft, Patent Document 1 discloses a technique of improving machinability by adding bismuth (Bi) and sulfur (S) as inclusion-generating elements.

CITATION LIST

Patent document

Patent Document 1: JP 2005-154886A

SUMMARY OF INVENTION

Technical Problem

Unfortunately, since a crankshaft is a component being large in size and being machined by a large amount, a load that is applied to a cutting tool is high, and a machining cycle time is long.

The present invention has been made in view of these problems in existing techniques, and an object of the present invention is to provide a non-heat treated steel for a crankshaft, in which fatigue strength and yield strength are improved, and moreover, machinability is improved, and also to provide a crankshaft using the non-heat treated steel.

Solution to Problem

The inventors of the present invention have conducted an intensive study in order to achieve the above-described object, and they have found that designing a composition in consideration of mutual relationships between elements for improving strength and elements for improving machinability, enables achieving the above-described object. Thus, the present invention has been completed.

That is, the present invention provides a non-heat treated steel for a crankshaft, comprising: iron (Fe),

0.37 to 0.43 mass % of carbon (C),
0.15 to 0.35 mass % of silicon (Si),
0.90 to 1.30 mass % of manganese (Mn), and
0.08 to 0.15 mass % of vanadium (V);
in which

the content of phosphorous (P) is 0.030 mass % or less,
the content of copper (Cu) is 0.300 mass % or less,
the content of nickel (Ni) is 0.30 mass % or less, and
the content of chromium (Cr) is 0.35 mass % or less.

The non-heat treated steel for a crankshaft of the present invention further comprises:

0.010 to 0.035 mass % of sulfur (S), and
0.02 to 0.05 mass % of bismuth (Bi).

The present invention also provides a crankshaft using the non-heat treated steel for a crankshaft.

Advantageous Effects of Invention

In the present invention, elements for providing sufficient strength required for a crankshaft, and elements for improving machinability, are added, and a composition is precisely adjusted in consideration of mutual relationships between these elements. Thus, it is possible to provide a non-heat treated steel for a crankshaft, in which fatigue strength and yield strength are improved, and moreover, machinability is improved, and it is also possible to provide a crankshaft using the non-heat treated steel.

DESCRIPTION OF EMBODIMENTS

A non-heat treated steel for a crankshaft (which may hereinafter be simply called a "non-heat treated steel") of the present invention is a non-heat treated steel containing vanadium (V) as an element for accelerating precipitation strengthening.

Vanadium (V) is an element that accelerates precipitation strengthening, and it precipitates as fine carbonitride to strengthen a ferrite-pearlite structure, which is generated during transformation in a cooling process after hot working. This eliminates the need for a thermal refining treatment after hot working.

Compared with other elements for accelerating precipitation strengthening, such as niobium (Nb) and titanium (Ti), vanadium (V) is solid-solved into an austenite structure at a low temperature and is easily solid-solved at a heating temperature in hot working. Thus, hot working can be performed at a low temperature, and a fine structure can be obtained after hot working, whereby yield strength can be further increased.

In general, a fillet part of a crankshaft can be applied with a highest stress due to bending deformation. This fillet part is strengthened by cold rolling, whereby a highly reliable crankshaft can be manufactured.

Cold rolling is a surface processing method that involves pressurizing a surface of a crankshaft while the crankshaft is rotated by a roller, to generate residual compressive stress and improve fatigue strength. Due to a high-pressure force in cold rolling, a workpiece itself should be a high yield strength steel material.

A non-heat treated steel containing vanadium (V), as described above, has a high hardness and a high yield strength because of the combination of vanadium carbonitride and a fine structure. Such a non-heat treated steel can be applied with residual compressive stress by cold rolling, but it generally has a low machinability.

In the non-heat treated steel of the present invention, sulfur (S) and bismuth (Bi) are added as machinability-improving elements, and other composition elements, in addition to these elements, are precisely controlled. Thus, the non-heat treated steel of the present invention has fatigue strength and yield strength that are improved to sufficient levels required for a crankshaft, and it also has a good machinability.

The non-heat treated steel for a crankshaft of the present invention comprises:
iron (Fe) as a main component and also comprises 0.37 to 0.43 mass % of carbon (C), 0.15 to 0.35 mass % of silicon (Si), 0.90 to 1.30 mass % of manganese (Mn), and 0.08 to 0.15 mass % of vanadium (V); and the content of phosphorous (P) is 0.030 mass % or less, the content of copper (Cu) is 0.300 mass % or less, the content of nickel (Ni) is 0.30 mass % or less, and the content of chromium (Cr) is 0.35 mass % or less.

Moreover, the non-heat treated steel comprises 0.010 to 0.035 mass % of sulfur (S) and 0.02 to 0.05 mass % of bismuth (Bi), which are machinability-improving elements.

Each element of the non-heat treated steel will be described.
The content of vanadium (V) is 0.08 to 0.15 mass % (0.08 mass % or greater and 0.15 mass % or less).

Vanadium (V) is an element that accelerates precipitation strengthening, as described above, but machinability is reduced if the content thereof is high. In the condition in which the content of vanadium (V) is in the above-described range, machinability can be improved, and fatigue strength can be improved by applying residual compressive stress, due to combination of vanadium (V), sulfur (S), and bismuth (Bi), which will be described below.

Strength tends to be reduced when the content of vanadium (V) is low, whereas machinability is reduced when the content of vanadium (V) is high. In view of this, the content of vanadium (V) is preferably 0.09 to 0.14 mass % and is more preferably 0.10 to 0.13 mass %.

The content of sulfur (S) is 0.010 to 0.035 mass %.

The above-described non-heat treated steel containing vanadium (V) does not need a thermal refining treatment after hot working. For this reason, a ferrite-pearlite structure is formed by cooling, and a ratio of a relatively soft ferrite structure is increased, whereby machinability is improved.

Sulfur (S) combines with manganese (Mn) to form manganese sulfide (MnS). Manganese sulfide (MnS) acts as a stress concentration source in a shear region during cutting and causes minute internal cracks, thereby reducing cutting resistance and improving chip breakage. In addition, manganese sulfide (MnS) also acts as a core of a ferrite structure to increase the ratio of a ferrite structure and improve machinability.

An excessively added sulfur (S) generates FeS, which can reduce strength of a steel material and promote generation of cracks in manufacturing.

However, in the condition in which a sufficient amount of manganese (Mn) is also contained, sulfur (S) presents in the non-heat treated steel in the form of manganese sulfide (MnS), as described above, resulting in preventing reduction in strength of the steel material and generation of cracks in manufacturing. In consideration of this, the content of sulfur (S) should be less than that of manganese (Mn) in any case.

Moreover, manganese sulfide (MnS) causes precipitation of surrounding bismuth (Bi), which will be described below, and it does not coarsen bismuth (Bi) but finely disperses bismuth (Bi), whereby reduction in fatigue strength due to bismuth (Bi) is prevented. For this purpose, the content of sulfur (S) is preferably 0.015 to 0.030 mass %, more preferably 0.017 to 0.028 mass %, and further preferably 0.020 to 0.028 mass %.

The content of bismuth (Bi) is 0.02 to 0.05 mass %.

Bismuth (Bi) has a melting point of approximately 271 °C and easily melts by frictional heat generated by cutting. Thus, in the condition in which bismuth (Bi) is finely dispersed, frictional surfaces between the non-heat treated steel and a cutting tool are fluid-lubricated by melted bismuth (Bi), resulting in reduction in cutting resistance.

In addition, melted bismuth (Bi) makes chips brittle and break, which decreases a load that is applied to an edge of a cutting tool and extends a service life thereof. The content of bismuth (Bi) is more preferably 0.02 to 0.04 mass %. When the content of bismuth (Bi) is high, a maximum area of inclusions containing bismuth (Bi) tends to be great.

Bismuth (Bi) presents in the structure of the non-heat treated steel as inclusions, and these inclusions tend to become a starting point of fatigue fracture when being coarsened. However, in the present invention, bismuth (Bi) is finely dispersed by manganese sulfide (MnS), as described above, and therefore, it does not become a starting point of fatigue fracture.

The inclusions containing bismuth (Bi), which are dispersed in the structure of the non-heat treated steel, are inclusions made only of bismuth (Bi) and inclusions of manganese sulfide (MnS) and bismuth (Bi) in contact with manganese sulfide (MnS). The maximum total area of these inclusions is preferably 2300 $\mu m^2$ or less. In the state in which the maximum area of the inclusions is 2300 $\mu m^2$ or less, reduction in fatigue strength can be prevented.

The content of carbon (C) is 0.37 to 0.43 mass %.

Carbon (C) increases the ratio of a pearlite structure in the ferrite-pearlite structure and improves strength.

Strength tends to be reduced when the content of carbon (C) is low, whereas machinability is reduced when the content of carbon (C) is high. In view of this, the content of carbon (C) is preferably 0.38 to 0.43 mass %, more preferably 0.38 to 0.42 mass %, and further preferably 0.39 to 0.42 mass %.

The content of manganese (Mn) is 0.90 to 1.30 mass %.

Manganese (Mn) increases the ratio of a pearlite structure and improves strength. In addition, manganese (Mn) combines with sulfur (S) to form MnS, thereby having characteristics of preventing reduction in strength of a steel material due to formation of FeS and generation of cracks in manufacturing a steel material.

Strength tends to be reduced when the content of manganese (Mn) is low, whereas machinability is reduced when the content of manganese (Mn) is high. In view of this, the content of manganese (Mn) is preferably 0.96 to 1.28 mass %, more preferably 1.00 to 1.20 mass %, and further preferably 1.01 to 1.17 mass %.

The content of silicon (Si) is 0.15 to 0.35 mass %.

Silicon (Si) is solid-solved in the structure of the non-heat treated steel and improves strength by solid solution strengthening.

Strength tends to be reduced when the content of silicon (Si) is low, whereas machinability and hot workability are reduced when the content of silicon (Si) is high. In view of this, the content of silicon (Si) is preferably 0.19 to 0.30 mass %, more preferably 0.20 to 0.30 mass %, and further preferably 0.20 to 0.26 mass %.

Phosphorous (P) easily segregates at grain boundaries to reduce toughness. In consideration of this, the content of phosphorous (P) is 0.030 mass % or less, more preferably greater than 0 and 0.030 mass % or less, and further preferably greater than 0 and 0.023 mass % or less. Copper (Cu) facilitates generation of cracks in hot working, and in consideration of this, the content thereof is 0.30 mass % or less, more preferably greater than 0 and 0.30 mass % or less, and further preferably greater than 0 and 0.21 mass % or less. Nickel (Ni) facilitates generation of bainite, and in consideration of this, the content thereof is 0.30 mass % or less, preferably greater than 0 and 0.30 mass % or less, more preferably greater than 0 and 0.20 mass % or less, and further preferably greater than 0 and 0.10 mass % or less. Chromium (Cr) facilitates generation of bainite, and in consideration of this, the content thereof is 0.35 mass % or less, more preferably greater than 0 and 0.35 mass % or less, and further preferably greater than 0 and 0.20 mass % or less. For inevitable impurities other than the elements described above, the contents thereof are preferably as low as possible, but they may be acceptable depending on the situation. Iron (Fe) is a main component, and the rest, which is other than the above-described elements and inevitable impurities, consists substantially of iron (Fe).

In the non-heat treated steel, a carbon equivalent (Ceq) that is represented by the following Formula (1) is preferably 0.95 to 0.99.

$$Ceq = [C] + 0.167[Si] + 0.222[Mn] + 0.067[Cu] + 0.067[Ni] + 0.25[Cr] + 0.4[Mo] + 1.8[V]$$

$$\cdots Formula\ (1)$$

It is noted that each pair of square brackets represents "mass %" of the element in the corresponding pair of square brackets in the Formula (1).

In the state in which the above-described range of the carbon equivalent (Ceq) is satisfied, sufficient mechanical properties and high machinability that are required for a crankshaft are both obtained. In addition, residual compressive stress at a fillet part of each of a crank pin and a journal is preferably 500 Mpa or greater from the point of view of fatigue strength, and it is more preferably 600 Mpa or greater and is further preferably 626 Mpa or greater.

EXAMPLES

The present invention will be more further detailed with reference to examples and comparative examples hereinafter, but the present invention should not be limited to these examples.

A non-heat treated steel for a crankshaft having a composition shown in the following Table 1 was heated at 1250 °C and was subjected to hot forging, and cutting was then performed thereon to form a crank pin part and a crank journal part. Performing hot forging in a temperature range of 750 to 1300 °C, which is an austenite region, enables generating a ferrite structure and a pearlite structure and obtaining high hardness and high yield strength required for a crankshaft.

Thereafter, fillet rolling (cold rolling) was performed on a rounded part of each of the crank pin and the crank journal to apply residual compressive stress and to work-harden them, whereby a crankshaft was prepared. In fillet rolling, a fillet rolling load was controlled between 700 to 1300 kgf so that a pressing depth would be the same each time.

The examples and the comparative examples were subjected to hot forging and fillet rolling in the same conditions.

<Evaluation>

The crankshaft was evaluated by the following methods.
The results of evaluation are shown in Table 1 together with the composition of each non-heat treated steel.

Hardness

Internal hardness (at a part that was not affected by fillet rolling) of the crank pin part was measured at six points by Rockwell hardness test, and an average of internal hardness at the six points was calculated.

Yield Strength

A test piece was cut out from the crankshaft pin part, and yield strength was measured by performing a tensile test on the test piece in accordance with the specifications of JIS Z 2241.

Fatigue Strength

After a load was applied to the crank pin part $10^7$ times, stress that did not damage the fillet part of the crank pin, which was a stress concentrated part, was measured. Fatigue strength was represented in a comparative manner by assuming that fatigue strength of a Comparative Example 4, which was the lowest, was 1.

Total Area of Inclusions of Bismuth and Inclusions of Combination of Bismuth and Manganese Sulfide

A cross section of the crank pin was observed by a scanning electron microscope (SEM), and an area of precipitates was calculated by statistics of extremes.

Machinability

Machinability was evaluated from a machining cycle time and cutting resistance in cutting the crankshaft. Machinability was represented in a comparative manner by assuming that machinability of a Comparative Example 3, which was the lowest, was 1.

Residual Stress

An X-ray diffractometer was used to measure a peak position of X-ray diffraction in a range from a surface to a depth of 1.0 mm of the fillet part of the crank pin, and a diffraction angle was obtained based on the measured position. Then, residual stress was measured from the diffraction angle or variations in diffraction angle, and a maximum value thereof was calculated.

[Table 1]

| | Composition (mass %) | | | | | | | | | |
|---|---|---|---|---|---|---|---|---|---|---|
| | C | Si | Mn | P | S | Cu | Ni | Cr | V | Bi |
| Example 1 | 0.42 | 0.23 | 1.15 | 0.016 | 0.020 | 0.180 | 0.06 | 0.18 | 0.12 | 0.03 |
| Example 2 | 0.40 | 0.21 | 1.11 | 0.015 | 0.022 | 0.150 | 0.04 | 0.15 | 0.13 | 0.04 |
| Example 3 | 0.38 | 0.21 | 1.11 | 0.015 | 0.022 | 0.150 | 0.04 | 0.15 | 0.13 | 0.03 |
| Example 4 | 0.43 | 0.25 | 1.15 | 0.015 | 0.020 | 0.150 | 0.04 | 0.15 | 0.12 | 0.02 |
| Example 5 | 0.40 | 0.19 | 1.15 | 0.015 | 0.020 | 0.150 | 0.02 | 0.15 | 0.12 | 0.03 |
| Example 6 | 0.41 | 0.21 | 0.96 | 0.015 | 0.020 | 0.180 | 0.04 | 0.16 | 0.13 | 0.02 |
| Example 7 | 0.41 | 0.20 | 1.28 | 0.015 | 0.020 | 0.150 | 0.02 | 0.15 | 0.10 | 0.02 |
| Example 8 | 0.41 | 0.26 | 1.17 | 0.023 | 0.028 | 0.210 | 0.10 | 0.20 | 0.09 | 0.02 |
| Example 9 | 0.40 | 0.21 | 1.10 | 0.015 | 0.020 | 0.200 | 0.10 | 0.15 | 0.14 | 0.03 |
| Example 10 | 0.39 | 0.22 | 1.01 | 0.014 | 0.021 | 0.150 | 0.02 | 0.16 | 0.10 | 0.03 |
| Example 11 | 0.42 | 0.20 | 1.19 | 0.015 | 0.020 | 0.150 | 0.02 | 0.16 | 0.13 | 0.02 |
| Comparative Example 1 | 0.36 | 0.20 | 1.15 | 0.015 | 0.020 | 0.150 | 0.02 | 0.15 | 0.09 | 0.02 |
| Comparative Example 2 | 0.44 | 0.20 | 1.30 | 0.015 | 0.020 | 0.150 | 0.02 | 0.15 | 0.08 | 0.00 |
| Comparative Example 3 | 0.40 | 0.50 | 1.10 | 0.015 | 0.020 | 0.150 | 0.02 | 0.15 | 0.24 | 0.00 |
| Comparative Example 4 | 0.40 | 0.20 | 0.90 | 0.015 | 0.020 | 0.150 | 0.02 | 0.15 | 0.04 | 0.00 |
| Comparative Example 5 | 0.40 | 0.20 | 1.15 | 0.014 | 0.009 | 0.180 | 0.02 | 0.15 | 0.12 | 0.00 |
| Comparative Example 6 | 0.40 | 0.21 | 1.10 | 0.015 | 0.022 | 0.015 | 0.04 | 0.15 | 0.13 | 0.20 |
| Example 1 | 0.99 | 657 | 27.0 | 604 | 1.32 | -686 | 0.79 | | | |
| Example 2 | 0.97 | 745 | 26.0 | 588 | 1.28 | -668 | 0.78 | | | |
| Example 3 | 0.95 | 766 | 23.0 | 540 | 1.19 | -641 | 0.73 | | | |
| Example 4 | 0.99 | 473 | 27.5 | 610 | 1.33 | -683 | 0.84 | | | |
| Example 5 | 0.95 | 611 | 23.5 | 550 | 1.21 | -641 | 0.74 | | | |
| Example 6 | 0.95 | 512 | 24.5 | 564 | 1.24 | -652 | 0.76 | | | |
| Example 7 | 0.96 | 397 | 25.0 | 572 | 1.25 | -663 | 0.77 | | | |
| Example 8 | 0.95 | 416 | 23.5 | 527 | 1.17 | -626 | 0.75 | | | |

(continued)

| | Composition (mass %) | | | | | | | | | |
|---|---|---|---|---|---|---|---|---|---|---|
| | C | Si | Mn | P | S | Cu | Ni | Cr | V | Bi |
| Example 9 | 0.99 | 639 | 27.5 | 620 | 1.33 | -690 | 0.84 | | | |
| Example 10 | 0.88 | 622 | 22.5 | 532 | 1.16 | -634 | 0.72 | | | |
| Example 11 | 1.00 | 454 | 29.0 | 625 | 1.36 | -701 | 0.85 | | | |
| Comparative Example 1 | 0.86 | 610 | 20.5 | 500 | 1.12 | -611 | 0.69 | | | |
| Comparative Example 2 | 0.96 | 0.00 | 24.0 | 515 | 1.13 | -653 | 0.89 | | | |
| Comparative Example 3 | 1.21 | 0.00 | 30.5 | 680 | 1.50 | -705 | 1.00 | | | |
| Comparative Example 4 | 0.75 | 0.00 | 17.0 | 446 | 1.00 | -608 | 0.78 | | | |
| Comparative Example 5 | 0.96 | 0.00 | 25.0 | 570 | 1.24 | -660 | 0.91 | | | |
| Comparative Example 6 | 0.95 | 2830 | 23.0 | 545 | 1.05 | -645 | 0.74 | | | |

The results in Table 1 show that the non-heat treated steel of the present invention has a high fatigue strength and a high yield strength and also has an excellent machinability.

**Claims**

1. A non-heat treated steel for a crankshaft, wherein the non-heat treated steel for a crankshaft comprises:

   iron (Fe),
   0.37 to 0.43 mass % of carbon (C),
   0.15 to 0.35 mass % of silicon (Si),
   0.90 to 1.30 mass % of manganese (Mn), and
   0.08 to 0.15 mass % of vanadium (V); and
   a content of phosphorous (P) is 0.030 mass % or less,
   a content of copper (Cu) is 0.300 mass % or less,
   a content of nickel (Ni) is 0.30 mass % or less, and
   a content of chromium (Cr) is 0.35 mass % or less; and
   wherein the non-heat treated steel for a crankshaft further comprises:
   0.010 to 0.035 mass % of sulfur (S), and
   0.02 to 0.05 mass % of bismuth (Bi).

2. The non-heat treated steel for the crankshaft according to claim 1, wherein a content of carbon (C) is 0.39 to 0.42 mass %.

3. The non-heat treated steel for the crankshaft according to claim 1 or 2, wherein a content of silicon (Si) is 0.20 to 0.30 mass %.

4. The non-heat treated steel for the crankshaft according to any one of claims 1 to 3, wherein a content of manganese (Mn) is 1.00 to 1.20 mass %.

5. The non-heat treated steel for the crankshaft according to any one of claims 1 to 4, wherein a content of vanadium (V) is 0.10 to 0.13 mass %.

6. The non-heat treated steel for the crankshaft according to any one of claims 1 to 5, wherein a carbon equivalent (Ceq) that is represented by the following Formula (1) is 0.95 to 0.99,

$$Ceq = [C] + 0.167[Si] + 0.222[Mn] + 0.067[Cu] + 0.067[Ni] + 0.25[Cr] + 0.4[Mo] + 1.8[V]$$

$\cdots$ Formula (1)

wherein each pair of square brackets represents "mass %" of an element in the corresponding pair of square brackets in Formula (1).

7. The non-heat treated steel for the crankshaft according to any one of claims 1 to 6, containing inclusions made only of bismuth (Bi) and compound inclusions of manganese sulfide (MnS) and bismuth (Bi) in contact with the manganese sulfide (MnS), in which a maximum total area of the inclusions and the compound inclusions is 2300 $\mu$m$^2$ or less.

8. A crankshaft using the non-heat treated steel for the crankshaft according to any one of claims 1 to 7.

9. The crankshaft according to claim 8, having a residual compressive stress at a fillet part of each of a crank pin and a journal.

## INTERNATIONAL SEARCH REPORT

| International application No. |
|---|
| **PCT/JP2022/010061** |

**A.    CLASSIFICATION OF SUBJECT MATTER**

*C22C 38/00*(2006.01)i; *C22C 38/46*(2006.01)i
FI:   C22C38/00 301Z; C22C38/46

According to International Patent Classification (IPC) or to both national classification and IPC

**B.    FIELDS SEARCHED**

Minimum documentation searched (classification system followed by classification symbols)

C22C38/00-38/60; C21D9/30; F16C3/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 10-310853 A (DAIDO STEEL CO., LTD.) 24 November 1998 (1998-11-24) | 1-8 |
| | claim 2, paragraphs [0005], [0014], [0022]-[0034], invention steel 5 | |
| Y | | 9 |
| X | JP 2003-055714 A (KOBE STEEL, LTD.) 26 February 2003 (2003-02-26) | 1-8 |
| | claims, paragraphs [0029], [0033], [0047]-[0055], invention steel 13, 16 | |
| Y | | 9 |
| Y | JP 2007-030115 A (NISSAN MOTOR CO., LTD.) 08 February 2007 (2007-02-08) | 9 |
| | paragraphs [0002]-[0003] | |
| A | JP 2003-201536 A (KOBE STEEL, LTD.) 18 July 2003 (2003-07-18) | 1-9 |
| P, X | JP 2021-155808 A (NIPPON STEEL CORP.) 07 October 2021 (2021-10-07) | 1-9 |
| | claims, paragraphs [0097]-[0144], test no. 38, 42 | |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/010061**

| Patent document cited in search report | | | Publication date (day/month/year) | Patent family member(s) | Publication date (day/month/year) |
|---|---|---|---|---|---|
| JP | 10-310853 | A | 24 November 1998 | (Family: none) | |
| JP | 2003-055714 | A | 26 February 2003 | (Family: none) | |
| JP | 2007-030115 | A | 08 February 2007 | (Family: none) | |
| JP | 2003-201536 | A | 18 July 2003 | (Family: none) | |
| JP | 2021-155808 | A | 07 October 2021 | (Family: none) | |

Form PCT/ISA/210 (patent family annex) (January 2015)

**EP 4 317 503 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005154886 A